# EUROPEAN PATENT APPLICATION

(11) **EP 1 217 499 A2**
(43) Date of publication of application: **26.06.2002**
(21) Application number: 01116619.6
(22) Date of filing: 12.07.2001
(51) Int. Cl.: G06F 1/16

(54) **Digital projection system for communication device and portable computing device**

(30) Priority: 29.11.2000 US 725277
(71) Applicant: Xybernaut Corporation, Fairfax, Virginia 22033 (US)
(72) Inventor: Williams, John W., Fairfax Station, VA 22039 (US)
(74) Representative: Borchert, Uwe Rudolf, Dipl.-Ing.

(57) **Abstract**

The invention is a projection system for mobile phones, personal communications devices, mobile computers, wearable computers, personal digital assistants (PDA's), desktop phones, and other devices which contain integral display screens, hereinafter designated as communication devices and portable computing devices. The projector is either integral to the device itself, integral to a charger or stand for the device, or inserts into the device via a card slot. The projector expands the display capability by allowing users to project images which would otherwise be displayed on screens integral to such devices onto a surface with larger dimensions for easier viewability.

## Description

The invention relates to a digital projection system for communication devices and portable computing devices according to the feature of claim 1 and a method according to the features of claim 15.

This invention relates to displays for mobile telephones, personal communications devices, portable computers, personal digital assistants, and other portable communications and computing devices, more specifically to a projection based display system for such devices.

Personal communication devices and personal digital assistants (hereinafter PDAs), mobile computers, palmtop computers, and wearable computers are becoming more ubiquitous on a daily basis and their capability is ever increasing. PDA's and communications devices are already able to store relatively large amounts of data, provide limited web content and email, and are migrating towards full computing capability. As a result, the displays on these devices are becoming larger and more robust in order to display the content and operating systems provided by these devices. Portable, palmtop, laptop and wearable computers are also becoming nearly as capable in performance as traditional desktop computers in terms of their memory, processor speed, and display resolution. The main deficiency of these products in comparison to desktop computers is in their display interface. The primary problem is that the design constraints on these type of devices run contrary to one another. On one hand, it is desirable to make the devices as small and light as possible, and on the other, because of the increased data capability, and a general desire for display performance that is consistent with state of the art desktop display devices, the screens need to be larger. If, for instance, someone is trying to read an email or look up contact information on a person on a PDA or communications device, it is not possible to visualize all the information at once, or even more than a few lines of the information on the integral display to these devices without having to scroll or tab to additional pages. Eventually, the resolution on these devices will increase to that of traditional displays, however, they will still be plagued by their size limitations. In the context of mobile computers, it may be desirable to display the information output to the screen to more than one person. Without using an external device each person wishing to view the information must crowd around the integral display.

Some attempts have been made to overcome this problem. With regard to communications devices, the screens on web capable cellular phones are getting larger to the point where they dominate the physical form factor of the phone. Nokia ® has a phone called the communicator which is hinged along the midline of its longest axis to reveal a screen and keyboard. PDA's such as the Casio Casseopia have integrated active matrix color displays, similar to those of laptop displays. However, these devices are limited by the fact that their displays will never be larger than the devices themselves. Thus, easy readability by the user and potentially by others is prevented.

With regard to mobile computing, they generally come equipped with a display output connector which can communicate with an external video projector or other display device. Such projectors are well known in the computer arts. They take computer output which would be displayed on the screen integral to the device and project it onto a larger surface for group viewing. While these external projectors are capable at displaying information in a manner that is more easily readable by a group of persons, they suffer from the limitation that they are large, bulky, heavy and expensive. It is impractical and in many cases impossible for a person to carry one around either on their body or in a laptop type bag, in addition to carrying underlying computing or communication devices they want to attach it to. Furthermore, there is significant set up time required in finding a surface to set the projector on and in hooking up the necessary cables to support power supply and to send the output data to the projector. These devices can not be held in a user's hand and merely activated with the push of a button for nearly instantaneous use.

Thus, it would be desirable to have integral capability for these type of devices for displaying more than a few lines of data. It would also be desirable to be able to display on a screen that is larger than the actual form factor of these devices which has been previously impossible. It would further be desirable to have a projection system which is lightweight, easily transported and easily used in conjunction with one of the aforementioned communication and computing devices.

It is, therefore, an object of this invention to provide a projection system for PDA's, mobile phones, personal communications devices, portable computers, hand held computers, wearable computers, and desktop phones which overcome the deficiencies cited above.

Another object of this invention is to provide a unique display means for PDA's, mobile phones, personal communication devices, portable computers, hand held computers, wearable computers, and desktop phones.

Still a further object of this invention is to provide a display means which allows for a viewable display which is larger than the physical form factor of the device containing the display.

Yet another object of this invention is to significantly expand the current display capabilities of the aforementioned devices without significantly increasing the size or weight of said devices.

Still another object of this invention is to provide an integral projection based display for PDA's, mobile phones, personal communication devices, portable computers, hand held computers, wearable computers, and desktop phones.

Still yet another object of this invention is to provide capability for displaying charts, graphs, pictures, video, and/or presentation slides with mobile phones, PDAs, palmtop computers, personal communication devices or other like devices.

These and other objects of this invention are accomplished by an integral projector which is built into the housing of hand held devices or into a charger or stand for said devices or into a card which inserts into such devices and which is devoid of the aforementioned limitations.

Additional advantages and characteristics result from the following description of several embodiments of the invention in connection with the drawings. In the drawings are shown:
- Figure 1: illustrates an inside view of the basic components of an exemplary video projector;
- Figure 2A: illustrates a side view of a mobile phone with an integrated video projector;
- Figure 2B: illustrates a front view of a mobile phone with the integrated video projector;
- Figure 3A: illustrates a mobile phone embodiment in the phone which is separated from a charging station which contains the integrated video projector;
- Figure 3B: illustrates the mobile phone joined with the charging station with integral video projector;
- Figure 4A: illustrates a PDA with integral video projector in the stowed position;
- Figure 4B: illustrates a PDA with integral video projector in the flip-up position with a simulated projection screen;
- Figures 5A and 5B: show a different PDA embodiment whereby the integrated projector flips up about its midline axis to serve as stand for elevating the projector end of the PDA when in use;
- Figure 6: illustrates a PDA embodiment whereby the projector is built into a card which inserts to a mated card slot integral to the PDA;
- Figure 7A: illustrates a PCMCIA card with an integral projector; and
- Figure 7B: illustrates a general purpose portable computer with the PCMCIA projector inserted and in use.

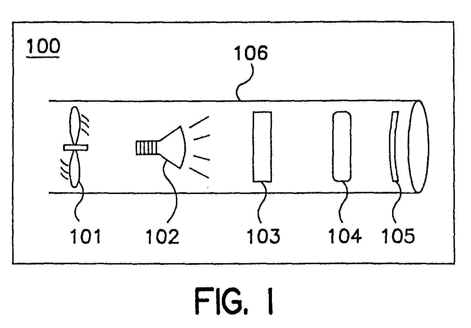

Figure 1 illustrates the basic components of an exemplary video projector. The projector 100 generally has a sealed protective shroud 106 which protects and contents the internal components. Starting at the open end, there is a protective lens cover 105 which protects the focusing lens 104. This allows the projection output to pass but serves as means of sealing the output end of the projector 100. Internal to the projector 100 is a light transmissive display screen 103 which displays the actual output of the computer or underlying device. The display screen 103 is essentially a miniature display device, such as a liquid-crystal type microdisplay. Behind display 103 is a light source 102. The light source 102 emits light through display 103 which is focused by lens 104 and projected through the open end of the shroud 106. Finally, there is an active cooling fan 101 which is used to keep the light source 102 from overheating the display 103.

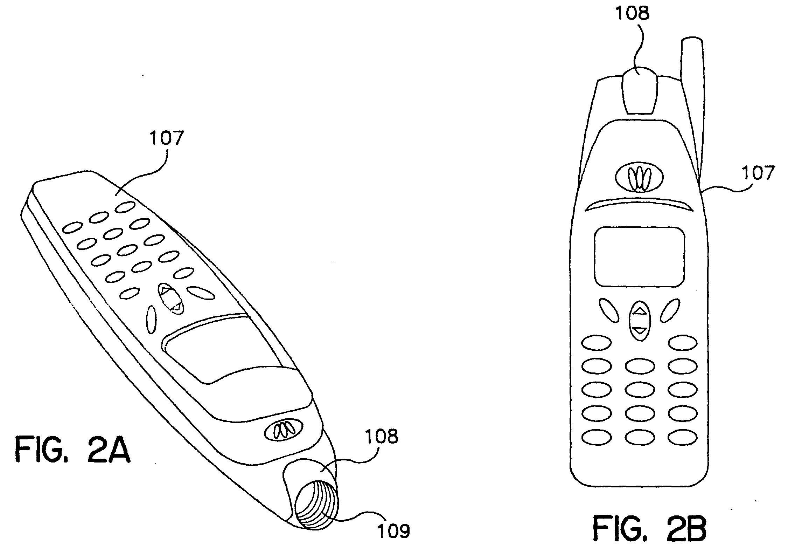

Figures 2A and 2B illustrate two views of a mobile phone 107 embodiment with an integrated video projector 108. The projector 108 is built into the top of the phone 107 so that when a user is holding the phone or has it placed upon a flat surface, the projected image from the projector 108 will be in front of him with the correct orientation for viewing. The protective lens 109 seals the open end of the projector 108.

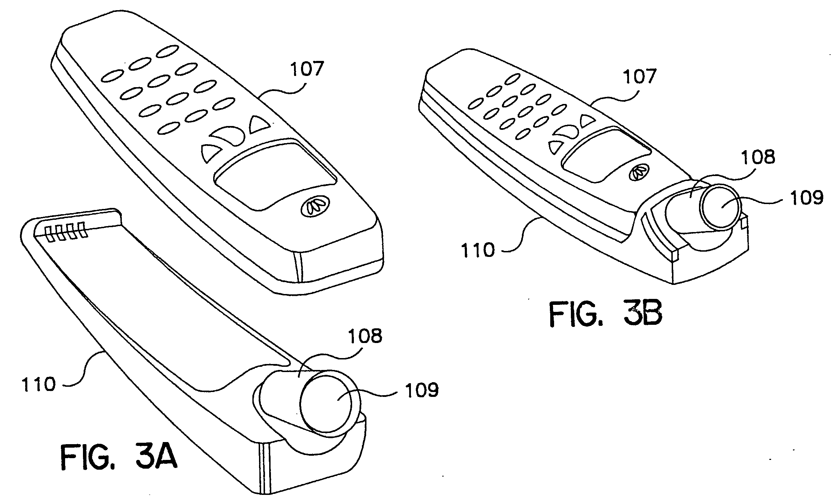

Figures 3A and 3B illustrate a variation on the mobile phone embodiment, whereby a mobile phone 107 does not contain an integral video projector, but rather a base station or charging station 110 possesses an integral projector 108. Thus, when the phone 107 is placed in the charging station 110, the projector 108 can be utilized presumably drawing its power from the station 110.

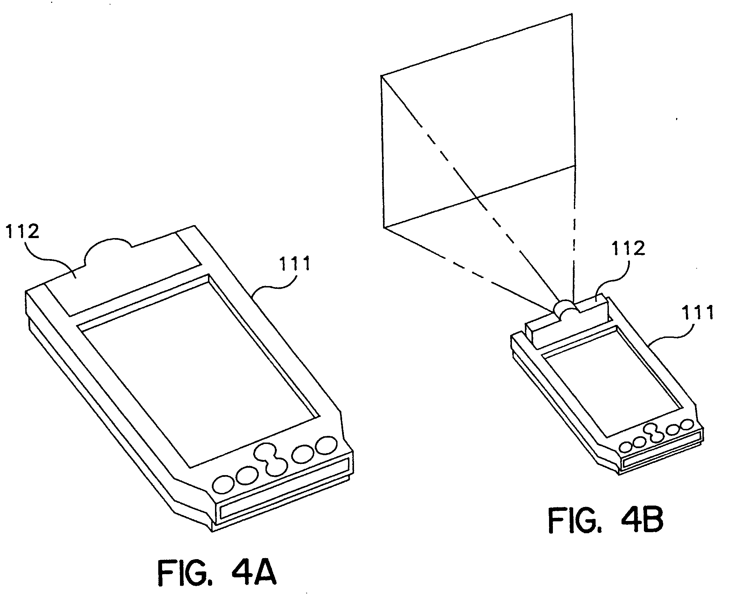

Figures 4A and 4B illustrate a PDA embodiment. In these figures the PDA 111 possesses a flip-up integral video projector 112. The projector 112 can be stored in the stowed position when not in use, protecting its lens and reducing the size of the PDA 111. It is hinged about its rear long axis. When in use, the projector 112 is merely flipped up and is able to project an image onto a wall or other surface affecting a projection screen.

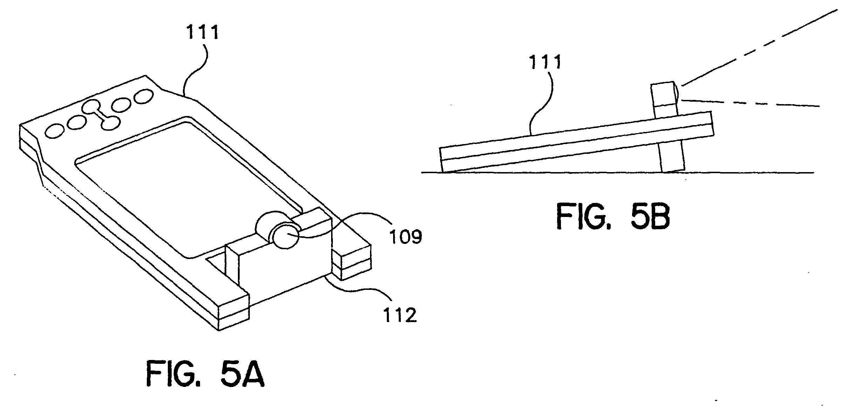

Figures 5A and 5B illustrate a variation on the PDA embodiment. In this embodiment the PDA 111 possesses integral video projector 112 and lens 109. The projector 112 is hinged about is midline axis perpendicular to the direction of projection. This midline hinge allows the PDA 111 to be slightly elevated in the front when the projector 112 is flipped up so that the projected image is slightly elevated to enhance viewability.

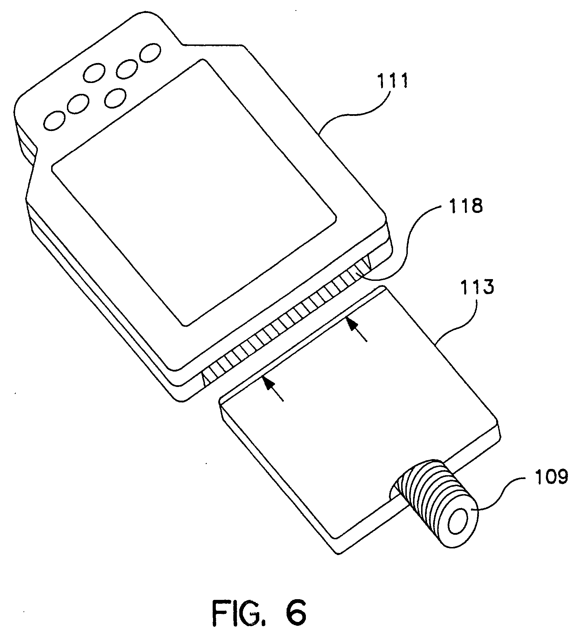

Figure 6 illustrates a PDA embodiment of the present invention, wherein the PDA 111 possesses an integral card slot 118. The card slot may be a PCMCIA type card slot or other standard or non-standard card slot. The video projector will be housed in an insertable card 113 which interfaces with the card slot 118. The lens of the projector 109 will be at the opposing end of the card 113 to the connection end. Thus, once the card is inserted it becomes available for use with the PDA to project data and images stored within the PDA.

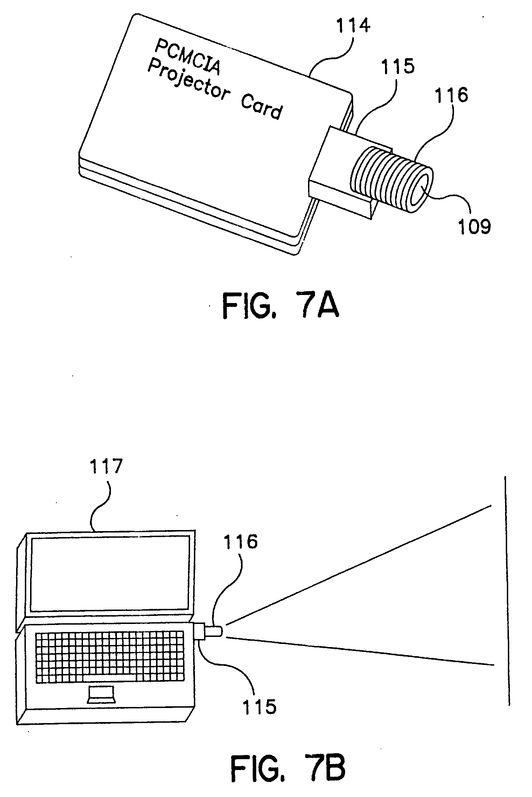

Figures 7A and 7B are directed towards a PCMCIA type embodiment for use with wearable or portable computers containing a PCMCIA type card slot. The hardware for the projector will be contained in the projector card 114 with the actual projector 116, lens 109, and mounting bracket 115 attached to the end of the card 114 which opposes the slot of the computer to which it is inserted. Figure 7B illustrates the PCMCIA projector card inserted into a laptop computer 117. Once inserted, only the mounting bracket 115 and the projector 116 are visible, projecting images outward along the axis of the projector and perpendicular to the lens surface. It may be desirable for the mounting bracket 115 to contain means for swiveling or rotating the projector to an optimal angle.

The invention is essentially a small video projector which is functionally attached or integrated into devices such as telephones, cellular telephones, personal digital assistants (hereinafter PDA's), palmtops, and even laptop or other portable computers. Ideally the video projector will be integrated in an unobtrusive manner into the physical housing of the communication device or portable computing device, or into an ingenious holster/docking station which includes electrical connectivity for transmitting the data to be projected by the projector which is housed in said holster/docking station, or into a card which inserts into one of the aforementiond devices. The disclosure of commonly assigned U.S. patent, 5,757,339, disclosing a similar projector utilized in a different environment, is hereby incorporated by reference into the present disclosure and will be hereinafter referred to as the '339 patent. In the context of this disclosure and claims, "communication devices" will be designated to include mobile phones, personal communications devices, desktop phones, and personal PDA's, which possess integral display screens. Also, in the context of this disclosure and claims, "portable computing devices" will be designated to include PDA's, palmtop computers, laptop computers, calculators, and other small portable computer devices, which contain integral display screens.

Existing displays on cellular phones and PDA's in particular are quite limited in the number of simultaneous characters or resolution they are capable of displaying. Even palmtop computers are not able to display a full page of text. It would be desirable to have a display in such small footprint devices which allows the user to visualize more simultaneous data or at least to display the data at a larger size which is able to more easily be viewed by others. By adding a small digital projection system to the device, at least the size and possibly the amount of data that can be displayed will significantly be increased. Also, for devices capable of receiving web content, it would be desirable to display this content in a full screen or larger sized mode analogous to that of a traditional display, rather than the limited size afforded by the LCD's on hand held devices, without the burden of carrying an external display device. It may also be desirable to display it in a manner that is easily viewed by others. Even laptop computers, which have displays as large as 13 to 14 inches, are not easily viewed by others. The projector should be adjustable to accommodate both low light situations that would consume the least power, and bright ambient daylight environments which would require the most power to be readable. The system could use blank walls, notebooks, the floor, or other flat surface to reflect the image. In a cellular phone for instance, it would be desirable to be able to display more or all of the total information contained in the available memory at once, obviating the need to scroll on the screen. For instance, a user could display the entire contents of his/her phone directory in alphabetical order on a wall or other flat surface. Additionally, bandwidth permitting, live or demand driven video could be projected by the projector attached or integral to the device, obviating the need for a large, heavy, expensive external video projector. In yet another example, a user could display stock charts reflecting price history of selected issues. For many investors trends and trend lines are of paramount importance in timing purchase of stocks. Thus, it would be beneficial for the user to be able to display this information to himself.

In another embodiment not shown, the projector could be built into a desktop docking station for the PDA such as known docking stations for the Palm ® series of PDAs and likewise draw its power from AC source. The principle would be the same as that of the charging station of the mobile phone. The projector would presumably receive its power from the charging station and would have a connector which affords communication with the data stored in the PDA.

In yet another embodiment, the projector could be integral to a desktop phone. The phone would sit on a desk or other flat surface and one face would possess an integral projector and lens which would project forward onto a wall. This would give the desktop phone video capabilities so that it could work as a video conferencing system or video phone, allowing the user to view graphics, video, or Internet content. Current video phones suffer from the same problem as the PDA's and cellular phones in that the screen is built into the phone and is thus limited in size by the physical size of the phone.

In yet an additional embodiment, the display can be built into a card which inserts into a socket or slot on devices such as PDA's, personal communications devices, and wearable computers. The slot could be an industry standard slot such as a PCMCIA slot, or a proprietary slot such as those built into Palm ® , Casseopia ® or other like commercial PDA-type devices. In this manner, the user could hold the device in his hand or set it on a desk and then project the display output. When this capability is not needed, the card can simply be removed from the slot, allowing other specific purpose card(s) to be inserted. If the card is a PCMCIA card then the projector can be used with virtually any mobile, wearable, portable, or laptop style computing device. This will significantly extend the display capabilities of the computing device. Ideally the projector end of the card will be operable to rotate in at least one plane to permit movement of the projected image without having to move the computer device itself.

The projector should be built with a balance of expense, capability, and power consumption. Many such small, lightweight display devices are known in the computer arts. They are utilized primarily in the field of monocular head mounted display devices. These devices are meant to provide a wearable display interface for computers. Some project their images onto a mirror which is viewed directly by the users while others are looked into and have light transmissive properties so that the user looks through the display and sees the image. Either such display would work with this invention. A focusing projector lens could be superimposed over one of these micro displays or back lighting could be employed on a light transmissive display with a focusing lens on the external face. Such projection devices use relatively low power and when used would not significantly handicap the battery life of the accompanying device when used selectively. Also it would not add significant weight to the form factor of the communication or portable computing device. The '339 patent teaches such a display which is utilized in a head mounted display which is also operable to project images for viewing by others. The projector can be a similar projector to the back lit digital projector taught in the '339 patent or alternatively, it could be an analog projector. In the context of the '339 the projector is part of a head mounted display which can be transformed into a video projector to permit viewing of output data from the attached computer by others besides the wearer of the display. The projector of the '339 patent is comprised essentially of a light source, focus lens, a condensing lens, and LCD or other suitable display means and optionally a small fan. However, one of ordinary skill in the art will understand that there may be significant variations in the design and construction of the actual projector without a departure in spirit or scope from the present invention.

Thus, the device solves the limitations of the known prior art with respect to displays for personal computing and communications devices through incorporation of a novel and useful integrated video projector. It is important to note however, that that resolution capability of the projector will generally be the same as that of the integral display to the device unless a separate video processor is included to feed the signal to the video projector which permits higher resolutions. Eventually the displays on these devices will achieve resolutions which are consistent with current state of the art desktop displays. The advantage of the present invention is that even if the same resolution is used, that is to say that there is no additional video processor for the projector, that the image will be much larger in size, increasing the readability of the graphics, operating system icons, and printed text.

The preferred and optimumly preferred embodiments of the present invention have been described herein and shown in the accompanying drawings to illustrate the underlying principles of the invention but it is to be understood that numerous modifications and ramifications may be made without departing from the spirit and scope of this invention.

### List of Reference Signs

- 100: projector
- 101: cooling fan
- 102: light source
- 103: display screen
- 104: focusing lens
- 105: lens cover
- 106: shroud
- 107: mobile phone
- 108: video projector
- 109: protective lens
- 110: charging station
- 111: PDA
- 112: video projector
- 113: card
- 114: projector card
- 115: mounting bracket
- 116: projector
- 117: laptop computer
- 118: card slot

## Claims

1. A digital projection system for communication devices and portable computing devices which comprises:
a device which is selected from the group consisting of communication devices and portable computing devices;
a display screen which is integral to said device;
a video projector for projecting an image derived from said device wherein said video projector is not an external stand-alone video projector;
circuitry for relaying output which would be displayed on said display screen to said video projector.

2. A digital projection system according to claim 1, **characterized in that** said projector is built integral to the housing of said device.

3. A digital projection system according to claim 1 or 2, **characterized in that** said projector is a back lit video projector.

4. A digital projection system according to any of the preceding claims, **characterized in that** said projector is a monochrome or a color projector.

5. A digital projection system according to any of the preceding claims, **characterized in that** said projector is built integral to the battery charger or desktop holder of said device.

6. A digital projection system according to any of the preceding claims, **characterized in that** said projector is built into a card which slides into a card slot on said device.

7. A digital projection system according to any of the preceding claims, **characterized in that** said projector is operable to display text, graphics, an operating system running on said device, video images and motion video.

8. A digital projection system according to any of the preceding claims, **characterized in that** said projector projects images and text which are larger in physical size than if displayed on the display screen which is integral to said device.

9. A digital projection system according to any of the preceding claims, **characterized in that** said projector projects images and text which are at least as high in resolution and which contain at least the same amount of simultaneous characters as the display screen which is integral to said device.

10. A digital projection system according to any of the preceding claims, **characterized in that** said projector projects data and images from a memory contained in said device.

11. A digital projection system according to claim 10, **characterized in that** said data and images include an operating system of said devices, information stored in the memory of said devices, text images, graphic images and motion videos.

12. A digital projection system according to any of the preceding claims, **characterized in that** said projector is operable to rotate about an axis to afford selective placement of the projected data and images on the surface to which it is being projected on.

13. A digital projection system according to claim 11, **characterized in that** said projector recesses or flips back in order to protect its lens when not in use.

14. A digital projection system according to any of the preceding claims, **characterized in that** a lens and light source facilitate back lighting to project data and images from said device.

15. A method for projecting images from a communication device or a portable computing device, the method comprising the steps of:
incorporating a video projector into a device selected from the group consisting of communication devices, portable computing devices, charging stations for such devices, and cards which insert into a slot in such devices, wherein said device possesses an integral display screen, and further wherein said incorporating includes integrating the projector into said device or into an attachment or component which mates with said device;
projecting images from said device using said projector, wherein said images include operating system interface text data, graphic data, video data, and motion video;
projecting images in a format which is larger in physical dimensions and at least as large in the number of simultaneous characters then if like images where to be displayed on a screen integral to said devices.
